Europäisches Patentamt

European Patent Office

Office européen des brevets

(11) Publication number: **0 435 467 A2**

# EUROPEAN PATENT APPLICATION

(21) Application number: **90312962.5**

(22) Date of filing: **29.11.90**

(51) Int. Cl.5: **H04B 10/20, H04L 12/44**

(30) Priority: **22.12.89 GB 8929014**

(43) Date of publication of application:
**03.07.91 Bulletin 91/27**

(84) Designated Contracting States:
**DE ES FR GB IT NL**

(71) Applicant: **STC PLC**
**1B Portland Place**
**London W1N 3AA(GB)**

(72) Inventor: **Bricheno, Terry**
**Moorland View**
**Great Sampford, Essex CB10 2RG(GB)**

(74) Representative: **Dennis, Mark Charles et al**
**STC Patents West Road**
**Harlow Essex CM20 2SH(GB)**

(54) **Optical network.**

(57) A synchronous network comprises a number of terminals or nodes interconnected optically via a common distribution centre. Signals transmitted by the nodes are synchronous at the distribution centre. The system nodes are coupled to the distribution centre via multifibre ribbons, there being a fibre provided for each internodal connection. This avoids the need for demultiplexing equipment in the nodes.

EP 0 435 467 A2

## OPTICAL NETWORK

This invention relates to optical networks for the transmission of data between a number of nodes or terminals.

Optical systems, utilising fibre optic transmission with various network configurations, employing either active or passive couplers and dividers, with both wavelength and time division multiplexing, are being developed at the present time. Uses include broadband overlay for subscriber access networks and ultra-high capacity packet switching for telecommunication or parallel processing computer applications. See for example A. Oliphant "Progress in the development of a digital optical routing system for television studio centres", International Broadcasting Convention IBC 88, Brighton, Sept. 88, IEE Conference Publication No. 293 pp 90-94, D.B. Payne & J.R. Stern "Single mode optical local networks", Conf. Proc. Globecom '85, Houston, paper 39.5 and E. Authurs et al "A fast optical cross connect for parallel processing computers" Proc. 13th European Conference on Optical Communication, Helsinki, Finland, Sept. 1987.

Such systems offer capacities which are orders of magnitude greater than electronic (time multiplexed) networks, complete flexibility of interconnect configuration, service transparency and considerable facility for future upgrades.

In order to make a particular connection between the nodes of such a network the optical receiver in the receiving node must be tuned into the same wavelength as the required transmitter. The switching and reconfiguration of connections in the network can be achieved either by switching the wavelength of transmission with fixed separate wavelength receivers at each node or by using fixed separate wavelength transmitters in each node and switched wavelength receiver.

For high speed reconfiguration of the interconnection pattern such as required by telecoms or computer packet switching applications it is necessary to devise a very rapid communication protocol between the nodes for setting up the required interconnection pattern. This is very much easier to achieve using wavelength switched transmitters and fixed wavelength receivers because in this case the network becomes "self routing" with messages automatically directed by the transmitter to the correct receiver. An example of such a network is described by E. Authurs et al. "HIPASS : an optoelectronic hybrid packet switching system" IEEE Jnl. on selected areas of Communications Dec. 1988. a disadvantage with this type of network is that it requires wavelength switched transmitter components which are very difficult to fabricate with adequate performance. A further disadvantage of conventional networks is the difficulty of providing a broadcast facility in which one node can broadcast a message to all the other nodes. This can introduce severe problems in maintaining the correct time sequence of signals.

Solutions to this problem are proposed in our co-pending application No. EP-89311362.1 which describes a synchronous optical network and in our co-pending United Kingdom application No. 8928698.3 which describes a further synchronous network. In the networks described in the above patent applications each node or terminal of the network is coupled to all the other terminals via a fibre optic coupling to a central star. Each terminal has its own characteristic wavelength and all wavelengths are carried on the same fibre path. Each terminal thus has demultiplexing equipment to resolve incoming signals into their individual wavelengths. The necessity to provide this terminal demultiplexing equipment results in a somewhat costly terminal construction which may not be desirable for all applications.

The object of the present invention is to provide an optical network in which the need for terminal demultiplexing is obviated.

According to the invention there is provided a synchronous network, including a plurality of nodes or terminals each of which is coupled to all the other nodes of the network via a common distribution point, characterised in that each node is coupled to the distribution point by a plurality of similar optical fibres, and that each of said optical fibres carries transmissions from one only of said nodes, the network being such that, in use, signals transmitted by the nodes via the network are synchronous at the common distribution point.

According to the invention there is further provided a synchronous network, including a plurality of nodes or terminals each of which is coupled to all the nodes of the network, including itself, via respective fibre optic paths each of which is routed via a common region, characterised in that each said optical path carries transmissions from one only of said nodes, and that the network is such that, in use, signals transmitted by the nodes via the network are synchronous at the common region.

As each optical fibre of the network carries transmissions from only one respective system node, the necessity to provide terminal demultiplexing equipment is obviated.

Embodiments of the invention will now be described with reference to the accompanying drawings in which:-

Fig. 1 is a general schematic diagram of a synchronous network;

Fig. 2 illustrates one form of intermodal coupling from the network of Fig. 1;

Fig. 3 illustrates an alternative form of internodal coupling;

Fig. 4 shows a typical frame format for transmission of data in the network of Fig. 1.

and Fig. 5 is a schematic diagram of a node or terminal construction.

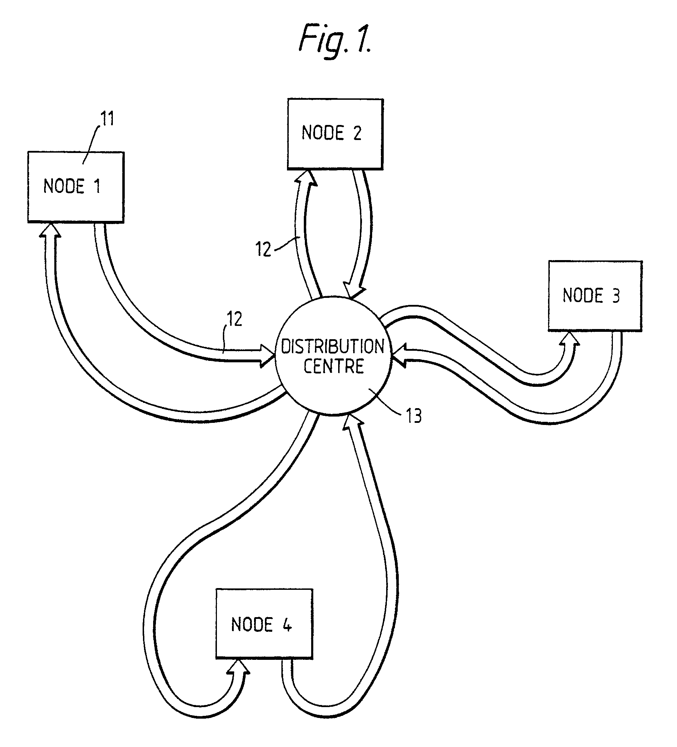

Referring to Fig. 1, the synchronous network comprises a number of nodes or terminals 11 interconnected by optical pathways 12 which pathways are routed via a common distribution centre 13. Signals transmitted by any one node are propagated to all the system nodes including the node originating the signal. In the arrangement of Fig. 1, one node is selected as a reference node for timing purposes, and all the other nodes adjust their timing so that all transmissions are synchronous at the common distribution centre 13.

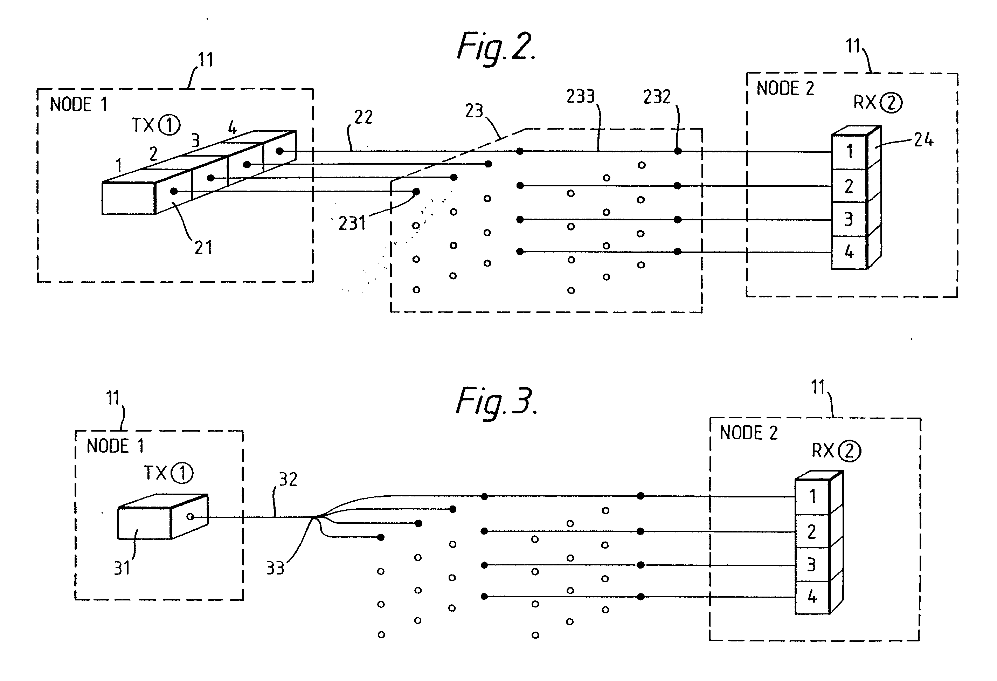

Fig. 2 illustrates one embodiment of the network of Fig. 1. In the arrangement of Fig. 2, each node 11 has a plurality of similar optical transmitters 21, one for each system node including itself. The transmitters 21 are driven in parallel as one coupled each via a respective optical fibre 22 to a common distribution centre 23. The distribution centre 23 has a number of input ports 231 equal to $n^2$ where n is the number of nodes or terminals, and has an equal number of $n^2$ output ports 232, each of which is coupled to a respective input port 231 by a fibre optic coupling 233. Each node 11 also has a plurality of receivers 24, again equal in number to the number of nodes. Each receiver 24 is coupled to a corresponding output port 232 of the distribution centre by an optical fibre 25. There is thus a direct individual fibre connection between each transmitter 21 and each receiver 24 of the system. Typically the fibres 22 and 25 are coupled to the distribution centre by multiway plug-in connectors.

Advantageously, the fibres coupling the transmitters of any one node to the distribution centre, and those fibres coupling the receivers of that node to the distribution centre, comprise ribbon fibres. The use of ribbon fibre ensures that the optical distance between each node and the distribution centre is substantially the same for all the node receivers as is similarly substantially the same for all the node transmitters. We have found that the perceived signal delays at the receivers of any given node should not vary by more than 1 tenth of a bit period to ensure a high transmission quality. For example, at a bit rate of 1 Gbit/s. the time differential between received signals should not exceed 100 picoseconds.

A modified network is illustrated in Fig. 3. In this arrangement each node 11 has a number of receivers equal to the number of nodes as before, but has only a single transmitter 31 coupled via a single fibre 32 to an n-way splitter 33 where n is the total number of nodes. The splitter is in turn coupled to the distribution centre.

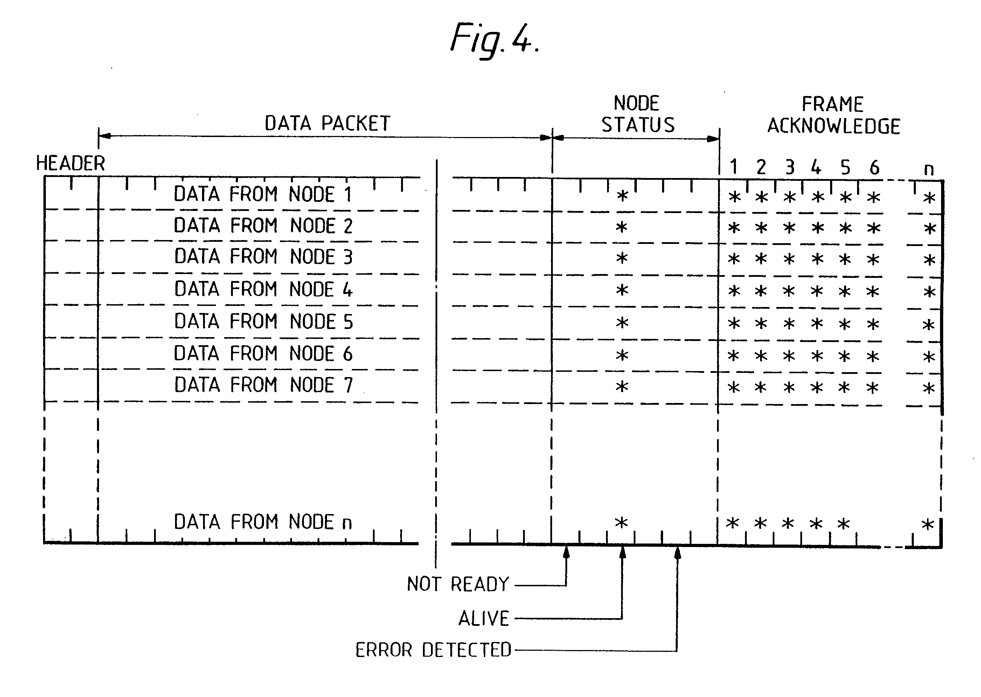

Typically, data is transmitted around the network of Figs. 1 and 2 or Figs. 2 and 3 in a sequence of frames, a suitable frame format being illustrated in Fig. 4. As shown in Fig. 4, each frame contains parallel signals from the system nodes and includes for each node a header providing a time zero reference for the frame, a data packet, node stating information, and frame acknowledgements of previously received frames. Each line of the frame is of course carried in a requisite optical path between the transmitting node and the receiving node. Preferably the frames are short in comparison to the time taken for a frame to transit the network.

The received data packets within a frame are treated as having been received in a predetermined order according to the source of the packets. This provides each frame with a time stamp order of data packets.

Synchronisation of the network may be achieved by the following technique.

One system node is selected as a reference node with which all other nodes synchronise their frames. When the system is turned on each node determines its distance in frame times from the distribution centre by measuring the delay between transmission and receipt of its own messages. This information is then transmitted to all other system nodes. From this information each node can adjust its timing so that frame synchronisation with frames from the reference node is effected at the distribution centre.

It will be understood that the above synchronisation technique is given by way of example and that the network is not limited to this particular technique.

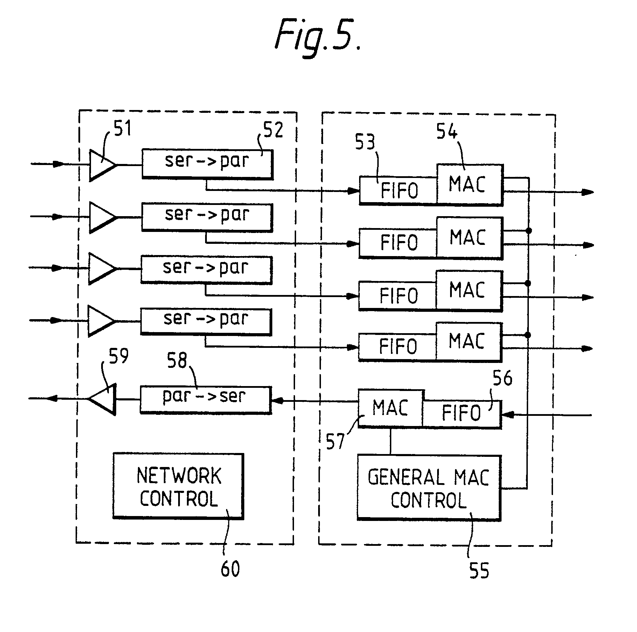

Referring now to Fig. 5, a network node or terminal includes optical receivers 51 equal in number to the total number of system nodes. The receivers 51 are coupled each via a respective series/parallel converter 52 to a corresponding first-in-first-out (FIFO) store 53. Read-out in the correct order of messages held in the FIFO stores 53 is controlled via access circuits 54 by a media access control circuit 55. This control circuit 55 also controls the output of transmitted messages stored in a further (output) FIFO store 56 via access circuit 57. The transmitted messages are output to the network via a parallel/series converter 58 and a transmitter 59. A network control circuit 60 synchronises the terminal with the network. The terminal is so arranged that incoming messages are sorted into frame order and, within a frame, sorted into a predetermined order according to their origin.

It will be appreciated that, in the multitransmitter version of the network, the transmitter 59 of the terminal of Fig. 5 may be replaced by an appropriate number of similar transmitters operated in parallel.

**Claims**

1. A synchronous network, including a plurality of nodes or terminals each of which is coupled to all the other nodes of the network via a common distribution point, characterised in that each node is coupled to the distribution point by a plurality of similar optical fibres, and that each of said optical fibres carries transmissions from one only of said nodes, the network being such, in use, signals transmitted by the nodes via the network are synchronous at the common distribution point.

2. A synchronous network, including a plurality of nodes or terminals each of which is coupled to all the nodes of the network, including itself, via respective fibre optic paths each of which is routed via a common region, characterised in that each said optical path carries transmission from one only of said nodes, and that the network is such that, in use, signals transmitted by the nodes via the network are synchronous at the common region.

3. A network as claimed in claim 1 or 2, characterised in that data is transmitted between the nodes in a sequence of frames.

4. A network as claimed in claim 2, characterised in that each terminal has means for sorting incoming messages into frame order and, within each said frame, into a predetermined order according to their origin.

5. A network as claimed in claim 1, 2 3, or 4, characterised in that the fibre optical path coupling each said node to the distribution centre comprises a multifibre ribbon.

6. A synchronous network substantially as described herein with reference to and as shown in Figs. 1, 2 4 and 5 or Figs.1, 3, 4 and 5 of the accompanying drawings.

# Fig.1.

Fig.2.

Fig.3.

EP 0 435 467 A2

## Fig.4.

DATA PACKET — NODE STATUS — FRAME ACKNOWLEDGE

HEADER

| | NODE STATUS | 1 | 2 | 3 | 4 | 5 | 6 | n |
|---|:---:|:---:|:---:|:---:|:---:|:---:|:---:|:---:|
| DATA FROM NODE 1 | * | * | * | * | * | * | * | * |
| DATA FROM NODE 2 | * | * | * | * | * | * | * | * |
| DATA FROM NODE 3 | * | * | * | * | * | * | * | * |
| DATA FROM NODE 4 | * | * | * | * | * | * | * | * |
| DATA FROM NODE 5 | * | * | * | * | * | * | * | * |
| DATA FROM NODE 6 | * | * | * | * | * | * | * | * |
| DATA FROM NODE 7 | * | * | * | * | * | * | * | * |
| DATA FROM NODE n | * | * | * | * | * | | | * |

NOT READY

ALIVE

ERROR DETECTED

EP 0 435 467 A2

# Fig.5.